# EUROPEAN PATENT APPLICATION

(11) **EP 4 484 006 A1**
(43) Date of publication of application: **01.01.2025**
(21) Application number: 23780394.5
(22) Date of filing: 27.03.2023
(51) Int. Cl.: B01J 29/76, B01D 53/86, B01D 53/94, B01J 29/46

(54) **N2O DECOMPOSITION CATALYST**

(30) Priority: 29.03.2022 JP 2022054675
(71) Applicant: Mitsubishi Heavy Industries, Ltd., Tokyo 100-8332 (JP)
(72) Inventor: MASUDA, Tomotsugu, Tokyo 100-8332 (JP); KAI, Keiichiro, Tokyo 100-8332 (JP); KANEDA, Shimpei, Tokyo 100-8332 (JP); YONEMURA, Masanao, Tokyo 100-8332 (JP)
(74) Representative: Studio Torta S.p.A.
(86) International application number: PCT/JP2023/012289
(87) International publication number: WO 2023/190385

(57) **Abstract**

Provided are: a catalyst containing a carrier including SiO₂ and Al₂O₃ and an iron element carried on the carrier, having a total amount of desorbed pyridine of 100 µmol or more with respect to 1 g catalyst within the range of 150°C inclusive to 450°C exclusive in the TPD spectrum, and configured to promote the decomposition reaction of nitrogen monoxide and nitric monoxide; and a method of reducing nitrogen monoxide and nitric monoxide in a gas containing water and/or a sulfur oxide, nitrogen monoxide, and nitric monoxide, the method comprising bringing a gas and a reductant into contact with the catalyst to decompose nitrogen monoxide and nitric monoxide, the gas containing water and/or a sulfur oxide, nitrogen monoxide, and nitric monoxide.

## Description

### Technical Field

The present invention relates to a catalyst (hereinafter, also referred to as the N2O decomposition catalyst" that is configured to promote a decomposition reaction of nitrous oxide or a decomposition reaction of nitrous oxide and nitric oxide. More specifically, the present invention relates to: a catalyst that can be suitably used for a purification treatment of exhaust gas of a coal-fired fluidized bed boiler, exhaust gas of an ammonia fuel marine engine, exhaust gas of an ammonia fueled gas turbine, exhaust gas from the process of nitrification or denitrification in a water treatment, or the like containing a large amount of water and/or sulfur oxide, preferably, for a purification treatment of flue gas of ammonia fuel, has excellent water resistance and/or sulfur oxide resistance, and is configured to promote a decomposition reaction of nitrous oxide or a decomposition reaction of nitrous oxide and nitric oxide; and a method of reducing nitrous oxide or nitrous oxide and nitric oxide from gas containing water and/or sulfur oxide and nitrous oxide or from gas containing water and/or sulfur oxide, nitrous oxide, and nitric oxide.

### Background Art

Nitrous oxide (N₂O) is produced by a reaction (3NO --7 NO₂ + N₂O) of NO produced by combustion, an oxidation reaction of ammonia (2NH₃ + 2O₂ → N₂O + 3H₂O) or the like. It is said that, when a fossil fuel containing a large amount of nitrogen is used, N₂O is likely to be generated. The chemical reaction of producing N₂O has temperature dependence, and N₂O is more likely to be generated at a lower temperature. Therefore, for example, in a furnace such as a fluidized bed boiler where combustion occurs at a low temperature of about 800 to 900°C, the amount of N₂O exhausted increases. In addition, N₂O can be generated by contact between a NOx removal catalystand NOx (= NO, NO₂). An engine or a gas turbine using ammonia fuel may exhaust nitrogen oxide (NO, NO₂, N₂O) derived from the ammonia fuel in addition to nitrogen oxide (NO, NO₂) derived from nitrogen in air. It is said that nitrous oxide has a greenhouse effect that is about 300 times stronger that of CO₂. It is said that nitrous oxide staying in the atmosphere is decomposed by an ultraviolet ray to produce nitric oxide and has an effect of destroying the ozone layer. Therefore, various techniques of decomposing and detoxifying nitrous oxide in the exhaust gas have been proposed.

For example, PTL 1 discloses a method of removing nitrous oxide in exhaust gas, the method including: mixing nitrous oxide-containing exhaust gas with ammonia; and bringing the mixture into contact with a catalyst where iron is supported on β-zeolite in a temperature range of 350 to 500°C to reduce and remove nitrous oxide in the exhaust gas.

PTL 2 discloses a nitrous oxide treatment catalyst for decomposing nitrous oxide in exhaust gas containing a large amount of sulfur, in which iron as an active metal is supported on a silica and alumina support, and a ratio of a strong acid to a total amount of the strong acid and a weak acid is large. PTL 2 also discloses a method of purifying exhaust gas containing nitrous oxide using the nitrous oxide treatment catalyst, the method including bringing the nitrous oxide treatment catalyst into contact with the exhaust gas to decompose nitrous oxide.

PTL 3 discloses a method of producing a zeolite catalyst where iron ions are supported for reducing nitrous oxide alone or reducing nitrous oxide and nitric oxide simultaneously using an ammonia reducing agent, the method including: (A) a stage of pre-treating zeolite with moisture at a high temperature; (B) a state of supporting iron ions on zeolite that is pre-treated in the (A) stage or zeolite that is not pre-treated without passing through the (A) stage using a precursor material solution of the iron ions; (C) a stage of filtering and drying the zeolite particles where the iron ions are supported in the (B) stage; (D) a stage of repeating the (B) stage and the (C) stage to increase an iron content in the powder dried in the (C) stage; (E) a stage of sintering the catalyst produced in the (D) stage in air; and (F) a stage of treating a catalyst with moisture at a high temperature, the catalyst being obtained by allowing the zeolite that has not passed through the (A) stage to pass through the (B) stage to the (E) stage. PTL 3 also discloses a method of reducing nitrous oxide or reducing nitrous oxide and nitric oxide using an ammonia reducing agent, the method including: supplying nitrous oxide alone or nitrous oxide and nitric oxide simultaneously; bringing the nitrous oxide or the nitrous oxide and the nitric oxide into contact with the zeolite catalyst that is produced in the above-described production method and where the activated iron ions are supported to cause a reaction; and reducing the nitrous oxide alone or the nitrous oxide and the nitric oxide simultaneously at a catalyst reaction temperature as a low temperature using the ammonia reducing agent to reduce the amount thereof.

PTL 4 discloses a catalyst composition suitable for use as a selective catalytic reduction catalyst, including: small-pore molecular sieve particles having a pore structure and a maximum ring size of eight tetrahedral atoms and infiltrated with a promoter metal; and metal oxide particles dispersed within the small-pore molecular sieve particles and external to the pore structure of the small-pore molecular sieve particles, in which the metal oxide particles contain one or more oxides of a transition metal or lanthanide of Group 3 or Group 4 of the Periodic Table.

PTL 5 discloses a catalyst for conversion of NOₓ and N₂O including iron chabazite and iron beta zeolite.

PTL 6 discloses a denitration catalyst for high-temperature exhaust gas for adding ammonia gas to exhaust gas containing nitrogen oxide to catalytically reduce and remove the nitrogen oxide in a reaction temperature range of 500 to 700°C, in which 0.5 to 5 wt% of iron in terms of Fe₂O₃ is supported on high-silica zeolite having a SiO₂/Al₂O₃ molar ratio of 20 or more.

In addition, as a technique of decomposing and detoxifying nitrogen oxide in exhaust gas, PTL 7 discloses an organic-free, metal-containing zeolite Beta with a silica-to-alumina molar ratio (SAR) in a range of 5 to 20, in which the metal contains at least 1.0 wt% of iron and/or copper. In addition, PTL 7 discloses a method of selective catalytic reduction of nitrogen oxide (NOx) in exhaust gas, the method including a step of at least partially bringing the exhaust gas into contact with an article containing an organic-free, metal-containing zeolite Beta, in which the metal contains at least 0.5 wt% of iron and/or copper.

PTL 8 discloses an organotemplate-free zeolitic material having a BEA framework structure including at least one alkali metal M, at least a part of atoms M in the alkali metal is substituted with Fe and/or Cu. In addition, PTL 8 discloses that the organotemplate-free zeolitic material is used: as a catalyst and/or catalyst support in a selective catalytic reduction (SCR) process for selective reduction of nitrogen oxide NOx; for oxidation of NH₃, in particular for oxidation of NH₃ slip in diesel systems; and for decomposition of N₂O.

### Citation List

### Patent Literature

[PTL 1] Japanese Unexamined Patent Application Publication No. H8-57262
[PTL 2] Japanese Unexamined Patent Application Publication No. 2014-176808
[PTL 3] PCT Japanese Translation Patent Publication No. 2012-521288
[PTL 4] PCT Japanese Translation Patent Publication No. 2019-502550
[PTL 5] PCT Japanese Translation Patent Publication No. 2020-527453
[PTL 6] Japanese Unexamined Patent Application Publication No. H3-296436
[PTL 7] Japanese Unexamined Patent Application Publication No. 2013-526406
[PTL 8] Japanese Unexamined Patent Application Publication No. 2013-49624

### Summary of Invention

### Problem to be solved by the invention

An object of the present invention is to provide: a catalyst that can be suitably used for a purification treatment of exhaust gas of a catalytic coal-fired fluidized bed boiler, exhaust gas of an ammonia fuel marine engine, exhaust gas of an ammonia fueled gas turbine, exhaust gas from the process of nitrification or denitrification in a water treatment, or the like containing a large amount of water and/or sulfur oxide, preferably, for a purification treatment of flue gas of ammonia fuel, has excellent water resistance and/or sulfur oxide resistance, and is configured to promote a decomposition reaction of nitrous oxide or a decomposition reaction of nitrous oxide and nitric oxide; and a method of reducing nitrous oxide or nitrous oxide and nitric oxide from gas containing water and/or sulfur oxide and nitrous oxide or from gas containing water and/or sulfur oxide, nitrous oxide, and nitric oxide.

### Solution toProblem

As a result of investigation for achieving the above-described object, the present invention including the following forms has been completed.

[1] A catalyst including:
   a support containing SiO₂ and Al₂O₃; and
   an iron element supported on the support,
   wherein in a TPD spectrum, a total amount of pyridine desorbed in a range of 150°C or higher and lower than 450°C is 100 µmol or more per 1 g of the catalyst, and
   the catalyst is configured to promote a decomposition reaction of nitrous oxide or a decomposition reaction of nitrous oxide and nitric oxide.
[2] The catalyst according to [1],
   wherein in the TPD spectrum, a ratio of a pyridine desorption amount at a peak top present in a range of 150°C or higher and lower than 450°C to a pyridine desorption amount at a peak top present in a range of 450°C or higher and 800°C or lower is more than 1.
[3] The catalyst according to [1] or [2],
   wherein in the TPD spectrum, a ratio of a total amount of pyridine desorbed in a range of 150°C or higher and lower than 450°C to a total amount of pyridine desorbed in a range of 450°C or higher and 800°C or lower is 0.9 or more.
[4] The catalyst according to [1], [2], or [3],
   wherein in the TPD spectrum, a temperature at a peak top in a range of 450°C or higher and 800°C or lower is 490°C or higher and 650°C or lower.
[5] The catalyst according to [1], [2], [3], or [4],
   wherein a saturated adsorption amount of pyridine is 100 µmol or more per 1 g of the catalyst.
[6] The catalyst according to [1], [2], [3], [4], or [5],
   wherein a crystallite size is 20 nm or more.
[7] A catalyst including:
   a support containing SiO₂ and Al₂O₃; and
   an iron element supported on the support,
   wherein in a TPD spectrum, a ratio of a pyridine desorption amount at a peak top present in a range of 150°C or higher and lower than 450°C to a pyridine desorption amount at a peak top present in a range of 450°C or higher and 800°C or lower is more than 1, and
   the catalyst is configured to promote a decomposition reaction of nitrous oxide or a decomposition reaction of nitrous oxide and nitric oxide.
[8] The catalyst according to [7],
   wherein in the TPD spectrum, a ratio of a total amount of pyridine desorbed in a range of 150°C or higher and lower than 450°C to a total amount of pyridine desorbed in a range of 450°C or higher and 800°C or lower is 0.9 or more.
[9] The catalyst according to [7] or [8],
   wherein in the TPD spectrum, a temperature at a peak top in a range of 450°C or higher and 800°C or lower is 490°C or higher and 650°C or lower.
[10] The catalyst according to [7], [8], or [9],
   wherein a saturated adsorption amount of pyridine is 100 µmol or more per 1 g of the catalyst.
[11] The catalyst according to [7], [8], [9], or [10],
   wherein a crystallite size is 20 nm or more.
[12] A catalyst including:
   a support containing SiO₂ and Al₂O₃; and
   an iron element supported on the support,
   wherein in a TPD spectrum, a ratio of a total amount of pyridine desorbed in a range of 150°C or higher and lower than 450°C to a total amount of pyridine desorbed in a range of 450°C or higher and 800°C or lower is 0.9 or more, and
   the catalyst is configured to promote a decomposition reaction of nitrous oxide or a decomposition reaction of nitrous oxide and nitric oxide.
[13] The catalyst according to [12],
   wherein in the TPD spectrum, a temperature at a peak top in a range of 450°C or higher and 800°C or lower is 490°C or higher and 650°C or lower.
[14] The catalyst according to [12] or [13],
   wherein a saturated adsorption amount of pyridine is 100 µmol or more per 1 g of the catalyst.
[15] The catalyst according to [12], [13], or [14],
   wherein a crystallite size is 20 nm or more.
[16] A catalyst including:
   a support containing SiO₂ and Al₂O₃; and
   an iron element supported on the support,
   wherein in a TPD spectrum, a temperature at a peak top in a range of 450°C or higher and 800°C or lower is 490°C or higher and 650°C or lower, and
   the catalyst is configured to promote a decomposition reaction of nitrous oxide or a decomposition reaction of nitrous oxide and nitric oxide.
[17] The catalyst according to [16],
   wherein a saturated adsorption amount of pyridine is 100 µmol or more per 1 g of the catalyst.
[18] The catalyst according to [16] or [17], wherein a crystallite size is 20 nm or more.
[19] A catalyst including:
   a support containing SiO₂ and Al₂O₃; and
   an iron element supported on the support,
   wherein a saturated adsorption amount of pyridine is 100 µmol or more per 1 g of the catalyst, and
   the catalyst is configured to promote a decomposition reaction of nitrous oxide or a decomposition reaction of nitrous oxide and nitric oxide.
[20] The catalyst according to [19],
   wherein a crystallite size is 20 nm or more.
[21] A catalyst including:
   a support containing SiO₂ and Al₂O₃; and
   an iron element supported on the support,
   wherein a crystallite size is 20 nm or more, and
   the catalyst is configured to promote a decomposition reaction of nitrous oxide or a decomposition reaction of nitrous oxide and nitric oxide.
[22] A catalyst including:
   an OSDA-free zeolite; and
   an iron element supported on the OSDA-free zeolite,
   the catalyst is configured to promote a decomposition reaction of nitrous oxide or a decomposition reaction of nitrous oxide and nitric oxide.
[23] The catalyst according to any one of [1] to [22],
   wherein even after being exposed to gas containing 20% of H₂O and 20 ppm of SO₂ at 530°C for 70 hours, a NO₂ decomposition rate is 60% or more and NO decomposition rate is 90% or more under a condition of 450°C.
[24] A catalyst element including:
   a substrate; and
   the catalyst according to any one of [1] to [23] that was coated on the substrate.
[25] A method of reducing nitrous oxide or nitrous oxide and nitric oxide from gas containing at least one selected from water and sulfur oxide and nitrous oxide or from gas containing at least one selected from water and sulfur oxide, nitrous oxide, and nitric oxide, the method including:
   bringing the gas containing at least one selected from water and sulfur oxide and nitrous oxide or the gas containing at least one selected from water and sulfur oxide, nitrous oxide, and nitric oxide and a reducing agent into contact with the catalyst according to any one of [1] to [23] or the catalyst element according to [24] to decompose nitrous oxide or nitrous oxide and nitric oxide.
[26] The method according to [25],
   wherein the reducing agent is ammonia or urea.
[27] The method according to [25] or [26],
   wherein the gas containing at least one selected from water and sulfur oxide and nitrous oxide or the gas containing at least one selected from water and sulfur oxide, nitrous oxide, and nitric oxide is flue gas of ammonia fuel.
[28] The method according to any one of [25] to [27],
   wherein in the gas, a content of the water is 10% or more and a content of the sulfur oxide is 15 ppm or more.
[29] An exhaust gas treatment device including:
   a reactor that accommodates the catalyst according to any one of [1] to [23] or the catalyst element according to[24];
   a first supply line that is configured such that gas to be treated flows into the reactor;
   a second supply line that is configured such that a reducing agent flows into the reactor; and
   an exhaust line that is configured such that gas flows out from the reactor,
   wherein the gas to be treated is gas containing at least one selected from water and sulfur oxide and nitrous oxide or gas containing at least one selected from water and sulfur oxide, nitrous oxide, and nitric oxide.
[30] The device according to [29],
   wherein the gas to be treated is exhaust gas of a coal-fired fluidized bed boiler, exhaust gas of an ammonia fuel engine, or exhaust gas of an ammonia fueled gas turbine.
[31] The exhaust gas treatment device according to [29] or [30],
   wherein in the gas to be treated, a content of the water is 10% or more and a content of the sulfur oxide is 15 ppm or more.
[32] An ammonia fuel engine comprising the device according to [29], [30], or [31].

### Advantageous Effects of Invention

Even when gas to be treated contains a large amount of water and/or sulfur oxide, the N2O decomposition catalyst according to the present invention can effectively promote a decomposition reaction of nitrous oxide or a decomposition reaction of nitrous oxide and nitric oxide in the presence of ammonia or the like. With the method according to the present invention, nitrous oxide can be effectively reduced from gas containing water and/or sulfur oxide and nitrous oxide. With the method according to the present invention, nitrous oxide and nitric oxide can be effectively reduced from gas containing water and/or sulfur oxide, nitrous oxide, and nitric oxide. The present invention can be suitably used for a purification treatment of exhaust gas of a catalytic coal-fired fluidized bed boiler, exhaust gas of an ammonia fuel marine engine, exhaust gas of an ammonia fueled gas turbine, exhaust gas from the process of nitrification or denitrification in a water treatment, or the like containing a large amount of water and/or sulfur oxide.

### Brief Description of Drawings

Fig. 1 is a diagram showing an example of an ammonia multi-fuel engine into which an exhaust gas treatment system is incorporated.
Fig. 2 is a diagram showing the example of the ammonia multi-fuel engine into which the exhaust gas treatment system is incorporated.
Fig. 3 is a diagram showing TPD spectra of catalysts A to F.
Fig. 4 is a diagram showing N₂O decomposition rates of the catalysts A to F with respect to the temperature.
Fig. 5 is a diagram showing NO decomposition rates of the catalysts A to F with respect to the temperature.
Fig. 6 is a diagram showing a catalytic reaction rate of N₂O with respect to a pyridine desorption amount w at 150°C to 450°C.
Fig. 7 is a diagram showing TPD spectra of catalysts G, H, and J to N.
Fig. 8 is a diagram showing N₂O decomposition rates of the catalysts G, H, and J to N with respect to the temperature.
Fig. 9 is a diagram showing NO decomposition rates of the catalysts G, H, and J to N with respect to the temperature.
Fig. 10 is a diagram showing N₂O decomposition rates of catalysts J2 and G2 with respect to the temperature.
Fig. 11 is a diagram showing NO decomposition rates of the catalysts J2 and G2 with respect to the temperature.
Fig. 12 is a diagram showing N₂O decomposition rates of catalysts J, J_{H}, K, K_{H}, G, and G_{H} with respect to the temperature.
Fig. 13 is a diagram showing NO decomposition rates of the catalysts J, J_{H}, K, K_{H}, G, and G_{H} with respect to the temperature.
Fig. 14 is a diagram showing N₂O decomposition rates of catalysts O, P, Q, R, and S with respect to the temperature.
Fig. 15 is a diagram showing NO decomposition rates of the catalysts O, P, Q, R, and S with respect to the temperature.

### Description of Embodimentsto carry out the invention

A N2O decomposition catalyst according to the present invention contains: a support containing SiO₂ and Al₂O₃; and an iron element supported on the support.

In the support, SiO₂ and Al₂O₃ may be contained as a mixture or may be contained as a composite material.

Examples of the composite material of SiO₂ and Al₂O₃ include aluminosilicate (xM₂O·yAl₂O₃·zSiO₂·nH₂O).

Specific examples of the aluminosilicates include mullite (3Al₂O₃·2SiO₂ to 2Al₂O₃·SiO₂); kaolinite (Al₄Si₄O₁₀(OH)₈); illite ((K,H₃O)(Al,Mg, Fe)₂(Si,Al)₄O₁₀[(OH)₂,(H₂O)]); zeolite; and feldspar ((Na,K,Ca,Ba)Al(Al,Si)Si₂O₈) such as sodium aluminosilicate, potassium aluminosilicate, or calcium aluminosilicate.

Examples of the zeolite include: natural zeolites such as amicite, analcime, barrerite, bellbergite, bikitaite, boggsite, brewsterite, brewsterite-Sr, brewsterite-Ba, chabazite, chabazite-Ca, chabazite-Na, chabazite-K, chiavennite, clinoptilolite, clinoptilolite-K, clinoptilolite-Na, clinoptilolite-Ca, cowlesite, dachiardite, dachiardite-Ca, dachiardite-Na, edingtonite, epistilbite, erionite, erionite-Na, erionite-K, erionite-Ca, faujasite, faujasite-Na, faujasite-Ca, faujasite-Mg, ferrierite, ferrierite-Mg, ferrierite-K, ferrierite-Na, garronite, gaultite, gismondine, gmelinite, gmelinite-Na, gmelinite-Ca, gmelinite-K, gobbinsite, gonnardite, goosecreekite, gottardiite, harmotome, heulandite, heulandite-Ca, heulandite-Sr, heulandite-Na, heulandite-K, hsianghualite, kalborsite, laumontite, levyne, levyne-Ca, levyne-Na, lovdarite, maricopaite, mazzite, merlinoite, mesolite, montesommaite, mordenite, mutinaite, natrolite, offretite, pahasapaite, partheite, paulingite, paulingite-Na, paulingite-K, paulingite-Ca, perlialite, phillipsite, phillipsite-Na, phillipsite-K, phillipsite-Ca, pollucite, roggianite, scolecite, stellerite, stilbite, stilbite-Ca, stilbite-Na, terranovaite, thomsonite, tschemichite, tschortnerite, wairakite, weinebeneite, willhendersonite, or yugawaralite; and synthetic zeolite such as A-type (LTA-type) zeolite, X-type (FAU-type) zeolite, LSX-type (FAU-type) zeolite, beta-type (BEA-type) zeolite, ZSM-5-type (MFI-type) zeolite, ferrierite-type (FER-type) zeolite, mordenite-type (MOR-type) zeolite, L-type (LTL-type) zeolite, Y-type (FAU-type) zeolite, MCM-22-type (MWW-type) zeolite, offretite/erionite-type (O/E-type) zeolite, AEI-type zeolite, AEL-type zeolite, AFT-type zeolite, AFX-type zeolite, CHA-type zeolite, EAB-type zeolite, ERI-type zeolite, KFI-type zeolite, LEV-type zeolite, LTN-type zeolite, MSO-type zeolite, RHO-type zeolite, SAS-type zeolite, SAT-type zeolite, SAV-type zeolite, SFW-type zeolite, TON-type zeolite, or TSC-type zeolite.

Among these, as the support used in the present invention, zeolite is preferable, synthetic zeolite is more preferable, and the BEA-type zeolite is still more preferable.

A ratio of SiO₂ to Al₂O₃ (SiO₂/Al₂O₃ molar ratio) is preferably 1 or more, more preferably 5 or more, still more preferably 10 or more, and still more preferably 20 or more. As the ratio of SiO₂ increases, the durability of the catalyst tends to increase. Therefore, the upper limit of the SiO₂/Al₂O₃ molar ratio is not particularly limited as long as the catalyst can be produced and, for example, is preferably 100, more preferably 60, and still more preferably 55.

The synthetic zeolite can be obtained, for example, by mixing a silica source, an alumina source, an alkali source, a solvent, an organic structure-directing agent (OSDA), a surfactant, and the like to obtain a starting reaction mixture, causing a hydrothermal reaction to occur with the starting reaction mixture under high temperature and high pressure in an autoclave. The synthetic zeolite obtained using this method contains an organic component derived from OSDA. The organic component can be removed by subsequent sintering.

Some synthetic zeolite can be obtained through a hydrothermal reaction without using OSDA. Further, one synthetic zeolite can be obtained using a mechanochemical treatment or a vapor synthesis method without using OSDA. The synthetic zeolite obtained without using OSDA (hereinafter, referred to as OSDA-free zeolite) does not contain an organic component derived from OSDA. In the present invention, the OSDA-free zeolite can be preferably used. The SiO₂/Al₂O₃ molar ratio in the OSDA-free zeolite is preferably 1 or more, more preferably 5 or more, and still more preferably 8 or more. The upper limit of the SiO₂/Al₂O₃ molar ratio in the OSDA-free zeolite is, for example, preferably 50, more preferably 45, and still more preferably 40.

An iron element is supported on the support in the form of Fe, Fe(III), Fe(II), Fe(II,III), or the like. Fe(III), Fe(II), or Fe(II,III) may be in the form of iron oxide, iron oxyhydroxide, iron hydroxide, or the like. The support may be in a form where iron fine particles or fine particles of an iron compound (for example, iron oxide) are attached to the support or may be in a form where cations of an element forming the support exchange (ion exchange) with cations of iron. In the decomposition reaction of N₂O, the supported iron element may be in the form of high-valence iron such as Fe(IV), Fe(V), Fe(VI), or the like.

The amount of the iron element supported is preferably 0.1 wt% or more, more preferably 1 wt% or more, still more preferably 2 wt% or more, and still more preferably 3wt% or more in terms of Fe₂O₃ with respect to the support. The upper limit of the amount of the iron element supported is not particularly limited as long as the iron element can be supported and is, for example, preferably 10 wt% and more preferably 7 wt% in terms of Fe₂O₃ with respect to the support. A method of supporting the iron element on the support is not particularly limited. For example, a method of infiltrating the support with an aqueous solution or a suspension liquid of an iron compound and subsequently performing drying/sintering.

In the N2O decomposition catalyst according to the present invention, optionally, another metal element may be supported on the support, and/or another metal element may be further supported on another support.

Examples of the other metal element include copper group elements (Cu, Ag, Au), platinum group elements (Pt, Rh, Pd, Ru, and the like), transition metal elements (Co, Ni, and the like other than Fe), and base metal elements (V, Mo, W, and the like) for which a function of promoting the decomposition reaction of N₂O or a function of promoting the decomposition reaction of N₂O and the decomposition reaction of NO can be expected. Examples of the other support on which the other metal element is supported include supports containing SiO₂, Al₂O₃, SiO₂·Al₂O₃, ZrO₂, TiO₂, TiO₂·SiO₂, and SiC.

The N2O decomposition catalyst according to the present invention has acid sites derived from an OH group or the like. The properties of the acid sites can generally be observed by a method known as a pyridine-TPD method. In the pyridine-TPD method, for example, a hydrogen flame ionization detector (FID) can be used as a detector. Pyridine is adsorbed on the acid sites. Pyridine can be adsorbed on the acid sites of both an outer surface and an inner surface of pores of the catalyst. It is generally understood that, as the temperature at which the adsorbed pyridine desorbs increases, the acid strength of the acid sites increases. In addition, it is also said that pyridine desorbed at a high temperature is derived from an acid site affected by diffusion, that is, an acid site on the inner surface of the pores (Nakano et al., "Measurement of Acidity of Various Zeolites by Temperature-Programmed Desorption Method", Toyo Soda Research Report, Vol. 29, No. 1 (1985), pp. 3-11). It is said that the effective molecular diameter of pyridine is 5.8 Å (refer to Anderson et al. J. Catal., 58, 114 (1979)). The total amount of acid sites can be determined by the saturated adsorption amount of pyridine. When pyridine is adsorbed and subsequently is heated at a certain rate (20 °C/min), the acid strength distribution of the acid sites can be determined by a distribution of the amounts of pyridine desorbed at respective temperatures (this distribution will also be referred to as a TPD spectrum). In the present invention, the adsorption of pyridine can be performed at room temperature to 150°C and preferably at 150°C.

In a TPD spectrum of the N2O decomposition catalyst according to the present invention, a ratio of a total amount of pyridine desorbed in a range of 150°C or higher and lower than 450°C to a total amount of pyridine desorbed in a range of 450°C or higher and 800°C or lower is preferably 0.9 or more, more preferably 0.98 or more, still more preferably 1 or more, and still more preferably 1.1 or more. The upper limit of the ratio of the total amount of pyridine desorbed in a range of 150°C or higher and lower than 450°C to the total amount of pyridine desorbed in a range of 450°C or higher and 800°C or lower is not particularly limited as long as the catalyst can be produced.

In the TPD spectrum of the N2O decomposition catalyst according to the present invention, the total amount of pyridine desorbed in a range of 150°C or higher and lower than 450°C is preferably 100 µmol or more, more preferably 200 µmol or more, still more preferably 250 µmol or more, and still more preferably 300 µmol or more per 1 g of the catalyst. The upper limit of the total amount of pyridine desorbed in a range of 150°C or higher and lower than 450°C is not particularly limited as long as the catalyst can be produced.

In the TPD spectrum of the N2O decomposition catalyst according to the present invention, the total amount of pyridine desorbed in a range of 450°C or higher and 800°C or lower is preferably 1000 µmol or less, more preferably 800 µmol or less, and still more preferably 500 µmol or less per 1 g of the catalyst. The lower limit of the total amount of pyridine desorbed in a range of 450°C or higher and 800°C or lower is not particularly limited as long as the catalyst can be produced.

In the TPD spectrum of the N2O decomposition catalyst according to the present invention, a value of a L peak (a pyridine desorption amount at a peak top present in a range of 150°C or higher and lower than 450°C) is more than a value of a H peak (a pyridine desorption amount at a peak top present in a range of 450°C or higher and 800°C or lower). That is, a ratio of the value of the L peak to the value of the H peak is preferably more than 1, more preferably 1.12 or more, still more preferably 1.2 or more, still more preferably 1.4 or more, and most preferably 1.6 or more. The upper limit of the ratio of the value of the L peak to the value of the H peak is not particularly limited as long as the catalyst can be produced.

In the TPD spectrum of the N2O decomposition catalyst according to the present invention, the lower limit of a temperature at which the H peak appears (temperature at a peak top in a range of 450°C or higher and 800°C or lower) is preferably 490°C, more preferably 510°C, and still more preferably 530°C, and the upper limit thereof ispreferably 650°C, more preferably 620°C, still more preferably 600°C, and still more preferably 580°C.

In the N2O decomposition catalyst according to the present invention, it is preferable that the saturated adsorption amount of pyridine is large. In the N2O decomposition catalyst according to the present invention, the saturated adsorption amount of pyridine is preferably 100 µmol or more, more preferably 200 µmol or more, still more preferably 500 µmol or more, and still more preferably 700 µmol or more per 1 g of the catalyst. In the N2O decomposition catalyst according to the present invention, the upper limit of the saturated adsorption amount of pyridine is not particularly limited as long as the catalyst can be produced, and is, for example, preferably 2000 µmol and more preferably 1500 µmol per 1 g of the catalyst. The saturated adsorption amount of pyridine can be measured at 150°C.

In the N2O decomposition catalyst according to the present invention, it is preferable that a crystallite size is large. In the N2O decomposition catalyst according to the present invention, the crystallite size is preferably 5 nm or more, more preferably 10 nm or more, still more preferably 20 nm or more, and still more preferably 30 nm or more. In the N2O decomposition catalyst according to the present invention, the upper limit of the crystallite size is not particularly limited as long as the catalyst can be produced, and is, for example, preferably 100 nm and more preferably 80 nm. The crystallite size can be measured using an X-ray diffraction method (for example, refer to JIS H 7805 or JIS R 7651).

In the N2O decomposition catalyst according to the present invention, it is preferable that, even after being exposed to gas containing 20% of H₂O and 20 ppm of SO₂ at 530°C for 70 hours, a NO₂ decomposition rate and NO decomposition rate are high. In the N2O decomposition catalyst according to the present invention, it is preferable that, even after being exposed to gas containing 20% of H₂O and 20 ppm of SO₂ at 530°C for 70 hours, a NO₂ decomposition rate is 60% or more and NO decomposition rate is 90% or more under a condition of 450°C.

The catalyst according to the present invention having the pyridine adsorption properties has excellent water resistance and/or sulfur oxide resistance and has a high function of promoting the decomposition reaction of N₂O or the decomposition reaction of N₂O and NO.

The N2O decomposition catalyst alone according to the present invention can promote not only the reduction reaction of N₂O but also the reduction reaction of NO or NO₂ in gas. The N2O decomposition catalyst according to the present invention can be used in combination or together with a well-knowncatalyst (denitration catalyst) configured to reduce NO or NO₂. By using the N2O decomposition catalyst according to the present invention in combination or together with the denitration catalyst, nitrogen oxide (NO, NO₂, N₂O) in exhaust gas can be more effectively reduced.

Examples of the reduction reaction of NO or NO₂ by ammonia include those represented by the following formulae.

4NO + 4NH₃ + O₂ → 4N₂ + 6H₂O

NO + NO₂ + 2NH₃ → 2N₂ + 3H₂O

6NO₂ + 8NH₃ → 7N₂ + 12H₂O

Examples of the reduction reaction of nitrous oxide by ammonia include those represented by the following formulae.

3N₂O + 2NH₃ → 4N₂ + 3H₂O

Depending on a well-known molding method, the N2O decomposition catalyst according to the present invention can be molded in a shape of a sphere, a Raschig ring, a Berl saddle, a Paul ring, a honeycomb, a plate, a corrugated shape, or the like. In addition, a catalyst element including: a substrate having a desired shape; and the N2O decomposition catalyst according to the present invention that covers the substrate may be adopted. Examples of the substrate include a honeycomb substrate, a corrugated substrate, and a lath substrate (such as expanded metal, punched metal, or wire netting).

An exhaust gas treatment device according to the present invention includes: a reactor that accommodates the N2O decomposition catalyst or the catalyst element according to the present invention; a first supply line that is configured such that gas to be treated flows into the reactor; a second supply line that is configured such that a reducing agent flows into the reactor; and an exhaust line that is configured such that gas flows out from the reactor. The N2O decomposition catalyst or the catalyst element according to the present invention can be accommodated in the reactor to form a fixed bed, a fluidized bed, or a moving bed. In the exhaust gas treatment device according to the present invention, the gas to be treated is gas containing at least one selected from water and sulfur oxide and nitrous oxide or gas containing at least one selected from water and sulfur oxide, nitrous oxide, and nitric oxide. In the gas to be treated, the content of water is preferably 10% or more and/or the content of sulfur oxide is preferably 15 ppm or more.

Examples of the gas to be treated used in the present invention include exhaust gas of a coal-fired fluidized bed boiler, exhaust gas of an ammonia fuel marine engine, and exhaust gas of an ammonia fueled gas turbine. In addition to sulfur oxide (SOx) and/or water (H₂O) and nitrous oxide and/or nitric oxide, the gas to be treated used in the present invention may further include nitrogen dioxide, carbon monoxide, carbon dioxide, hydrogen, hydrocarbon, oxygen, or nitrogen.

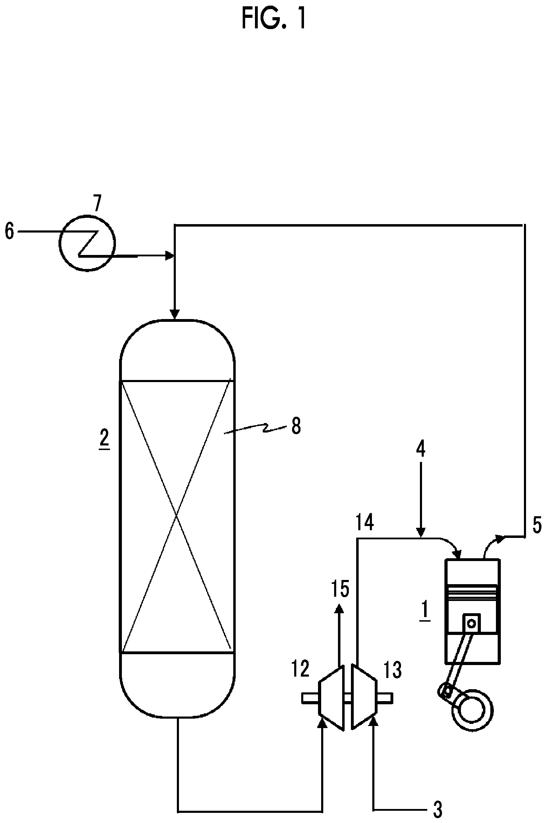

Fig. 1 is a diagram showing an example of an ammonia fuel engine including the exhaust gas treatment device according to the present invention. Not only a reducing agent (for example, ammonia or urea) 6 but also diluted air (not shown) or the like are added to gas exhausted from a cylinder 1 of the ammonia multi-fuel engine (ammonia fuel engine) through an exhaust manifold 5. The mixed gas of the exhaust gas and the reducing agent flow into a catalyst reactor 2 including a fixed bed 8 into which the N2O decomposition catalyst according to the present invention is charged. Mainly N₂O and NOx in the fixed bed 8 into which the N2O decomposition catalyst is charged are decomposed to be chemically changed into N₂ and H₂O. The gas exhausted from the catalyst reactor rotates a turbine 12 in a turbocharger, flows out from the turbocharger, and is exhausted out from the system through an exhaust pipe 15. Due to the rotation of the turbine 12, a compressor 13 that is provided in the same shaft as the turbine 12 in the turbocharger rotates. The compressor 13 compresses air 3 that is taken in. The compressed air is supplied to the cylinder 1 through an intake manifold 14 of the ammonia multi-fuel engine. Fuel 4 is combusted in the cylinder. In Fig. 1, the fuel is supplied to the cylinder after being mixed with the compressed air. In a diesel engine, fuel can be injected into a cylinder.

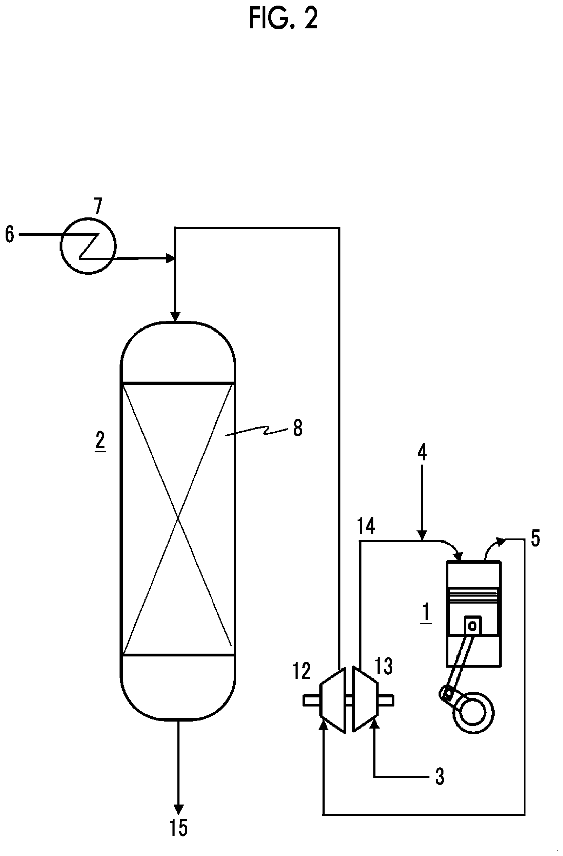

Fig. 2 is a diagram showing another example of the ammonia fuel engine including the exhaust gas treatment device according to the present invention. Gas exhausted from the cylinder 1 of the ammonia multi-fuel engine (ammonia fuel engine) through the exhaust manifold 5 rotates the turbine 12 in the turbocharger. Due to the rotation of the turbine 12, the compressor 13 that is provided in the same shaft as the turbine 12 in the turbocharger rotates. The compressor 13 compresses air 3 that is taken in. The compressed air is supplied to the cylinder 1 through the intake manifold 14 of the ammonia multi-fuel engine. Fuel 4 is combusted in the cylinder. In Fig. 2, the fuel is supplied to the cylinder after being mixed with the compressed air. In a diesel engine, fuel can be injected into a cylinder. Not only the reducing agent (for example, ammonia or urea) 6 but also diluted air (not shown) or the like are added to the gas flowing out from the turbocharger. The mixed gas of the exhaust gas and the reducing agent flow into a catalyst reactor 2 including the fixed bed 8 into which the N2O decomposition catalyst according to the present invention is charged. Mainly N₂O and NOx in the fixed bed 8 into which the N2O decomposition catalyst is charged are decomposed to be chemically changed into N₂ and H₂O. The gas exhausted from the catalyst reactor is exhausted out to the system through the exhaust pipe 15.

The method according to the present invention is to reduce nitrous oxide or nitrous oxide and nitric oxide from the gas to be treated. The method according to the present invention includes bringing the gas to be treated and the reducing agent into contact with the catalyst or the catalyst element according to the present invention to decompose nitrous oxide or nitrous oxide and nitric oxide. From the viewpoint of the catalyst lifetime, the content of water in the gas to be treated is preferably small and more preferably is less than 30%. The method according to the present invention exhibits a sufficient effect for the gas to be treated where the content of water is large, for example, for the gas to be treated where the content of water is 1% or more or the gas to be treated where the content of water is 10% or more. From the viewpoint of the catalyst lifetime, the content of sulfur oxide (SOx) in the gas to be treated is preferable small, more preferably 300 ppm or less, and still more preferably 250 ppm or less. The method according to the present invention exhibits the sufficient effect for the gas to be treated where the content of SOx is large, for example, for the gas to be treated where the content of SOx is 1 ppm or more, the gas to be treated where the content of SOx is 5 ppm or more, or the gas to be treated where the content of SOx is 15 ppm or more.

The content of nitrous oxide in the gas to be treated is not particularly limited and is preferably 1 ppm or more and 1000 ppm or less and more preferably 10 ppm or more and 500 ppm or less. The content of nitric oxide in the gas to be treated is not particularly limited and is preferably 1 ppm or more and 1000 ppm or less and more preferably 5 ppm or more and 500 ppm or less. In the gas to be treated, the content of water and/or the content of sulfur oxide is preferably 15 ppm or more.

Sulfur dioxide (SO₂) is likely to cause a side reaction represented by the following formula to occur. The N2O decomposition catalyst according to the present invention can suppress the progress of the side reaction (in the present application, this property will be referred to as sulfur oxide resistance).

2SO₂ + O₂ --7 2SO₃

Water (H₂O) is produced by the reducing reaction of nitrogen oxide. When a large amount of water is present in the system, dealumination of the support is likely to occur. The N2O decomposition catalyst according to the present invention can suppress the progress of the dealumination (in the present application, this property will be referred to as water resistance).

In the method according to the present invention, the gas to be treated and the reducing agent can be brought into contact with the N2O decomposition catalyst or the catalyst element using a well-known method. For example, a fixed bed reactor, a fluidized bed reactor, a moving bed reactor, or a simulated moving bed reactor can be used for the contact.

The temperature during the contact is preferably 200 to 950°C, more preferably 300 to 700°C, and still more preferably 400 to 500°C. A pressure during the contact may be the same as the atmosphere or may be higher than the atmospheric pressure. When the pressure is higher than the atmospheric pressure, an increase of a frequency (adsorption rate) at which nitrous oxide, nitric oxide, and the reducing agent are brought into contact with the catalyst can be expected.

Examples of the reducing agent used in the present invention include: a nitrogen-based reducing agent such as ammonia or urea; a hydrocarbon-based reducing agent such as methane, ethane, propane, propylene, methanol, or dimethylethyl; hydrogen; and carbon monoxide. Among these, a nitrogen-based reducing agent is preferable, and ammonia or urea is more preferable. The amount of the reducing agent is not particularly limited as long as it is sufficient for decomposing nitrous oxide or nitrous oxide and nitric oxide in the gas. For example, when the reducing agent is ammonia, the amount of the reducing agent is preferably 0.67 to 1.2 moles with respect to 1 mole of the total amount of nitrous oxide and nitric oxide. Using a well-known vaporizer, ejector, or the like, the reducing agent can be added to and mixed with the gas to be treated. In flue gas of ammonia fuel, the amount of ammonia remaining in the flue gas can also be set by adjusting the combustion rate of the ammonia fuel.

Hereinafter, the present invention will be described using examples in more detail. Note that these examples are merely exemplary of the present invention, but the scope of the present invention is not limited thereto.

### Catalyst Production Example 1

### (Impregnation Step <Ion Exchange>)

60 g of BEA-type zeolite (SiO₂/Al₂O₃ ratio = 25) was poured into 2000 ml of an aqueous solution heated to 80°C and containing 13.2 g of iron(III) nitrate nonahydrate (Fe₂(NO₃)₃·9H₂O). Next, in a state where the temperature was kept at 80°C, the mixture was stirred for 3 hours to obtain a slurry. The slurry was dehydrated using a suction filter to which filter paper (No. 5C) was attached. A predetermined amount of pure water was poured to clean the cake on the filter paper. The cleaned cake was dried at 110°C for 12 hours and then sintered at 500°C for 5 hours. The sintered product was pulverized using a planetary ball mill to obtain a powdered Fe-supported zeolite catalyst A.

### (Pyridine-TPD Method)

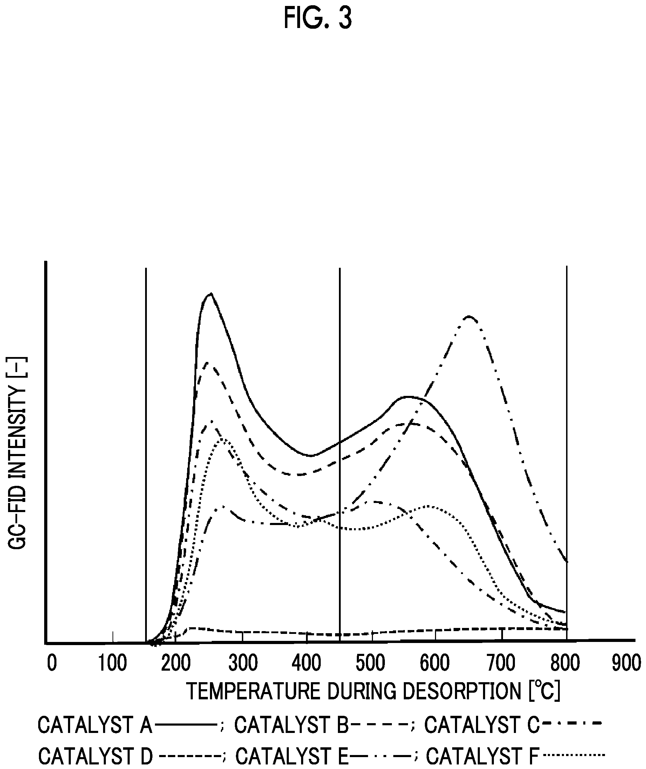

An adsorption tube was filled with a predetermined amount (12.5 mg) of the catalyst. As a result, as a pre-treatment, helium was blown at 30 cc/min, and the catalytic bed temperature was kept at 450°C for 1 hour. After that the catalytic bed temperature was decreased to 100°C or lower. Next, helium was blown at 10 cc/min, and pyridine was injected into the catalytic bed inlet side of the adsorption tube in a state where the catalytic bed temperature was maintained at 150°C. The pyridine amount on the catalytic bed outlet side was determined by GC-FID. When a fluctuation in the pyridine amount was stopped (assuming that the adsorption at 150°C was saturated), the injection of pyridine was stopped. 30 minutes after stopping the injection of pyridine, the catalytic bed temperature was increased at a rate of 20 °C/min. The pyridine amount on the catalytic bed outlet side in 150°C to 800°C was determined by GC-FID, and the TPD spectrum was recorded. The TPD spectrum, the pyridine desorption amount, and the like of the Fe-supported zeolite catalyst A are shown in Fig. 3 and Table 1. The crystallite size of the Fe-supported zeolite catalyst A was 14.8 nm.

### (Coating Step)

Pure water was poured into the Fe-supported zeolite catalyst A, and the solution was subsequently stirred to obtain a catalyst slurry. A honeycomb substrate was coated with the catalyst slurry in a coating amount of 70 g/m². The catalyst slurry was dried at 120°C for 2 hours and was sintered at 500°C for 2 hours to obtain a honeycomb catalyst A.

### Catalyst Production Example 2

A powdered Fe-supported zeolite catalyst B and a honeycomb catalyst B were obtained using the same method as that of Catalyst Production Example 1, except that the BEA-type zeolite (SiO₂/Al₂O₃ ratio = 25) was changed to BEA-type zeolite (SiO₂/Al₂O₃ ratio = 28). The TPD spectrum, the pyridine desorption amount, and the like of the Fe-supported zeolite catalyst B are shown in Fig. 3 and Table 1.

### Catalyst Production Example 3

A powdered Fe-supported zeolite catalyst C and a honeycomb catalyst C were obtained using the same method as that of Catalyst Production Example 1, except that the BEA-type zeolite (SiO₂/Al₂O₃ ratio = 25) was changed to BEA-type zeolite (SiO₂/Al₂O₃ ratio = 7.5). The TPD spectrum, the pyridine desorption amount, and the like of the Fe-supported zeolite catalyst C are shown in Fig. 3 and Table 1.

### Catalyst Production Example 4

60 g of CHA-type zeolite (SiO₂/Al₂O₃ ratio = 24) was poured into 2000 ml of an aqueous solution heated to 80°C and containing 13.2 g of iron(III) nitrate nonahydrate (Fe₂(NO₃)₃·9H₂O). Next, in a state where the temperature was kept at 80°C, the mixture was stirred for 3 hours to obtain a slurry. The slurry was filtered using a suction filter to which filter paper (No. 5C) was attached. A predetermined amount of pure water was poured to clean the cake on the filter paper. The cleaned cake was dried at 110°C for 12 hours and then sintered at 500°C for 5 hours. The sintered product was pulverized using a planetary ball mill to obtain powder.

This powder was poured into 2000 ml of an aqueous solution containing 13.2 g of iron(III) nitrate nonahydrate (Fe₂(NO₃)₃·9H₂O), and the above-described operation was further performed twice (an ion exchange step was performed three times in total) to obtain a powdered Fe-supported zeolite catalyst D. The TPD spectrum, the pyridine desorption amount, and the like of the Fe-supported zeolite catalyst D are shown in Fig. 3 and Table 1.

A honeycomb catalyst D was obtained using the same method as that of Catalyst Production Example 1, except that the Fe-supported zeolite catalyst A was changed to the Fe-supported zeolite catalyst D.

### Catalyst Production Example 5

A powdered Fe-supported zeolite catalyst E and a honeycomb catalyst E were obtained using the same method as that of Catalyst Production Example 1, except that the BEA-type zeolite (SiO₂/Al₂O₃ ratio = 25) was changed to MFI-type zeolite (SiO₂/Al₂O₃ ratio = 30). The TPD spectrum, the pyridine desorption amount, and the like of the Fe-supported zeolite catalyst E are shown in Fig. 3 and Table 1.

### Catalyst Production Example 6

A powdered Fe-supported zeolite catalyst F and a honeycomb catalyst F were obtained using the same method as that of Catalyst Production Example 1, except that the BEA-type zeolite (SiO₂/Al₂O₃ ratio = 25) was changed to BEA-type zeolite (SiO₂/Al₂O₃ ratio = 24). The TPD spectrum, the pyridine desorption amount, and the like of the Fe-supported zeolite catalyst F are shown in Fig. 3 and Table 1.

**[Table 1]**

| | Catalyst A | Catalyst B | Catalyst C | Catalyst D | Catalyst E | Catalyst F |
|---|---|---|---|---|---|---|
| CatalystSupport | Zeolite | Zeolite | Zeolite | Zeolite | Zeolite | Zeolite |
| SiO₂/Al₂O₃ | 25 | 28 | 7.5 | 24 | 30 | 24 |
| Structure Type | BEA | BEA | BEA | CHA | MFI | BEA |
| Amount of Fe Supported (wt% in terms of Fe₂O₃] | 3.7 | 4.3 | 4.3 | 5.0 | 2.8 | 3.9 |
| TPD Spectrum | | | | | | |
| Pyridine Desorption Amount w at 150°C to 450°C [µmol/g] | 265 | 223 | 157 | 4 | 109 | 135 |
| Pyridine Desorption Amount s at 450°C to 800°C [µmol/g] | 251 | 236 | 236 | 13 | 294 | 122 |
| Desorption Amount w/Desorption Amount s [-] | 1.06 | 0.94 | 0.67 | 0.31 | 0.37 | 1.11 |
| L Peak Value/H Peak Value [-] | 1.43 | 1.29 | 1.58 | 0.83 | 0.41 | 1.51 |
| Pyridine Saturated Adsorption Amount [µmol/g] | 605 | 617 | 333 | 80 | 493 | 294 |

### Test Example 1

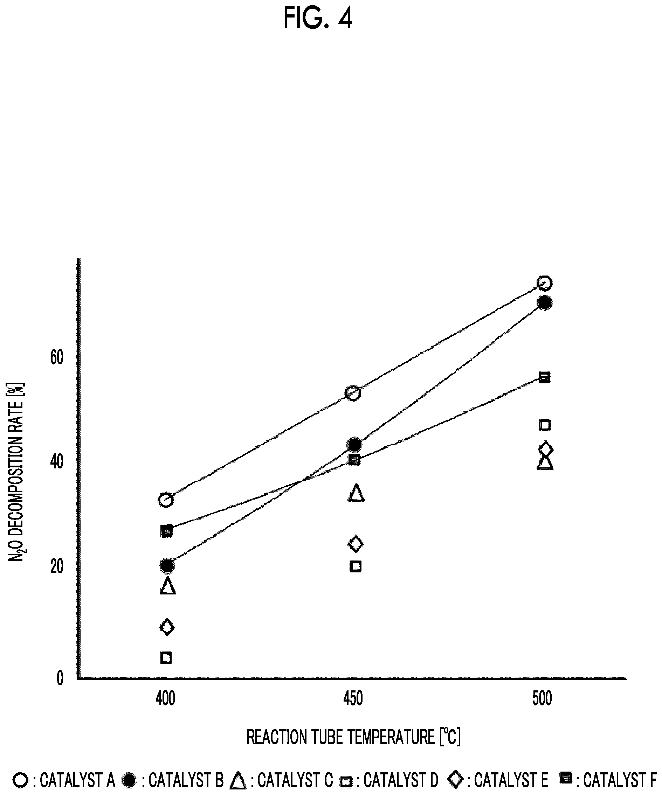

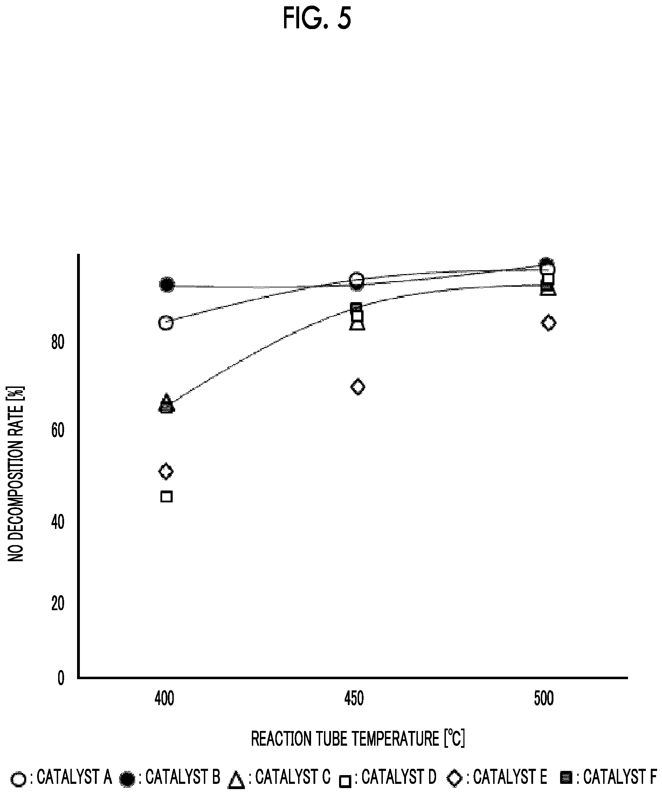

Each of the above-described honeycomb catalysts A to F was attached to a reaction tube. Simulant gas having a composition ratio shown in Table 2 was caused to flow at AV = the amount of gas/the geometric surface area of the catalyst = 25 Nm/hr, and the reaction tube was set to 400°C, 450°C, and 500°C. At each of the temperatures, a N₂O decomposition rate and a NO decomposition rate were measured. The results are shown in Figs. 4 and 5. In particular, the N₂O decomposition rates and the NO decomposition rates of the catalysts A and B at 400 to 500°C were high.

**[Table 2]**

| Composition Ratio of Simulant Gas | |
|---|---|
| NO | 34 ppm |
| N₂O | 120 ppm |
| NH₃ | 114 ppm |
| SO₂ | 113 ppm |
| O₂ | 4% |
| CO₂ | 16% |
| H₂O | 10% |
| N₂ | Balance |

### Test Example 2

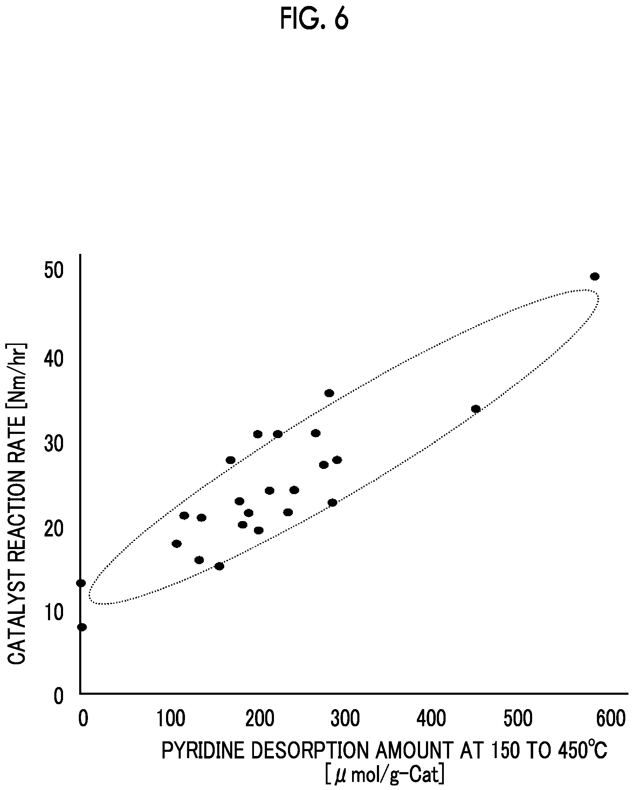

Plural kinds of powdered Fe-supported zeolite catalysts and honeycomb catalysts B were obtained using the same method as that of Catalyst Production Example 1, except that the support kind, the support amount, the sintering temperature, the sintering time, the co-catalyst addition, the SiO₂/Al₂O₃ ratio, and the like were changed. The amount of pyridine desorbed in a range of 150°C or higher and lower than 450°C was measured by the pyridine-TPD method. The N₂O decomposition rate was measured using the same method as that of Test Example 1. Based on the measurement result, the catalytic reaction rate was calculated assuming that the N₂O decomposition rate at 500°C was a first-order reaction. The results are shown in Fig. 6. It can be seen that, as the amount of pyridine desorbed in a range of 150°C or higher and lower than 450°C increases, the catalytic reaction rate (Nm/hr) tends to increase.

### Catalyst Production Example 7

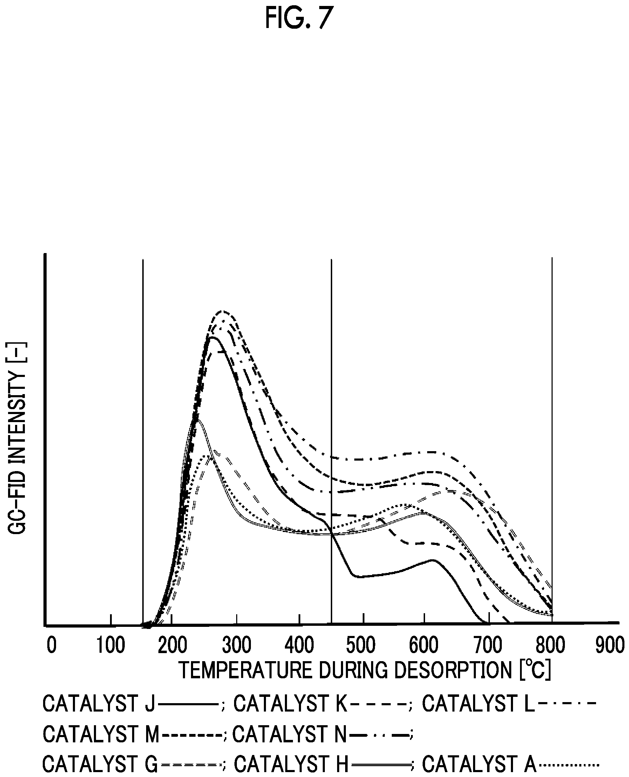

60 g of BEA-type zeolite (SiO₂/Al₂O₃ ratio = 25) was poured into 2000 ml of an aqueous solution heated to 80°C and containing 9.1 g of iron(II) sulfate heptahydrate (FeSO₄·7H₂O). Next, in a state where the temperature was kept at 80°C, the mixture was stirred for 3 hours to obtain a slurry. The slurry was dehydrated using a suction filter to which filter paper (No. 5C) was attached. A predetermined amount of pure water was poured to clean the cake on the filter paper. The cleaned cake was dried at 110°C for 12 hours and then sintered at 500°C for 5 hours. The sintered product was pulverized using a planetary ball mill to obtain a powdered Fe-supported zeolite catalyst G. The TPD spectrum, the pyridine desorption amount, the crystallite size, and the like of the Fe-supported zeolite catalyst G are shown in Fig. 7 and Table 3.

Pure water was poured into the Fe-supported zeolite catalyst G, and the solution was subsequently stirred to obtain a catalyst slurry. A honeycomb substrate was coated with the catalyst slurry in a coating amount of 70 g/m². The catalyst slurry was dried at 120°C for 2 hours and was sintered at 500°C for 2 hours to obtain a honeycomb catalyst G.

### Catalyst Production Example 8

A powdered Fe-supported zeolite catalyst H was obtained using the same method as that of Catalyst Production Example 7, except that 9.1 g of iron(II) sulfate heptahydrate (FeSO₄·7H₂O) was changed to 13.2 g of iron(III) nitrate nonahydrate (Fe₂(NO₃)₃·9H₂O) and the temperature during the sintering was changed from 500°C to 600°C. The TPD spectrum, the pyridine desorption amount, the crystallite size, and the like of the Fe-supported zeolite catalyst H are shown in Fig. 7 and Table 3.

A honeycomb catalyst H was obtained using the same method as that of Catalyst Production Example 7, except that the Fe-supported zeolite catalyst G was changed to the Fe-supported zeolite catalyst H.

### Catalyst Production Example 9

60 g of BEA-type zeolite (SiO₂/Al₂O₃ ratio = 10) having a large crystallite size was poured into 2000 ml of an aqueous solution heated to 80°C and containing 26.4 g of iron(III) nitrate nonahydrate (Fe₂(NO₃)₃·9H₂O). Next, in a state where the temperature was kept at 80°C, the mixture was stirred for 3 hours to obtain a slurry. The slurry was dehydrated using a suction filter to which filter paper (No. 5C) was attached. A predetermined amount of pure water was poured to clean the cake on the filter paper. The cleaned cake was dried at 110°C for 12 hours and then sintered at 600°C for 5 hours. The sintered product was pulverized using a planetary ball mill to obtain a powdered Fe-supported zeolite catalyst J. The TPD spectrum, the pyridine desorption amount, the crystallite size, and the like of the Fe-supported zeolite catalyst J are shown in Fig. 7 and Table 3.

Pure water was poured into the Fe-supported zeolite catalyst J, and the solution was subsequently stirred to obtain a catalyst slurry. A honeycomb substrate was coated with the catalyst slurry in a coating amount of 70 g/m². The catalyst slurry was dried at 120°C for 2 hours and was sintered at 500°C for 2 hours to obtain a honeycomb catalyst J.

### Catalyst Production Example 10

A powdered Fe-supported zeolite catalyst K and a honeycomb catalyst K were obtained using the same method as that of Catalyst Production Example 9, except that the BEA-type zeolite (SiO₂/Al₂O₃ ratio = 10) was changed to BEA-type zeolite (SiO₂/Al₂O₃ ratio = 12) having a large crystallite size. The TPD spectrum, the pyridine desorption amount, the crystallite size, and the like of the Fe-supported zeolite catalyst K are shown in Fig. 7 and Table 3.

### Catalyst Production Example 11

A powdered Fe-supported zeolite catalyst L was obtained using the same method as that of Catalyst Production Example 9, except that 26.4 g of iron(III) nitrate nonahydrate (Fe₂(NO₃)₃·9H₂O) was changed to 18.2 g of iron(II) sulfate heptahydrate (FeSO₄·7H₂O) and the temperature during the sintering was changed from 600°C to 500°C. The TPD spectrum, the pyridine desorption amount, the crystallite size, and the like of the Fe-supported zeolite catalyst L are shown in Fig. 7 and Table 3.

A honeycomb catalyst L was obtained using the same method as that of Catalyst Production Example 9, except that the Fe-supported zeolite catalyst J was changed to the Fe-supported zeolite catalyst L.

### Catalyst Production Example 12

A powdered Fe-supported zeolite catalyst M and a honeycomb catalyst M were obtained using the same method as that of Catalyst Production Example 9, except that 26.4 g of iron(III) nitrate nonahydrate (Fe₂(NO₃)₃·9H₂O) was changed to 18.2 g of iron(II) sulfate heptahydrate (FeSO₄·7H₂O). The TPD spectrum, the pyridine desorption amount, the crystallite size, and the like of the Fe-supported zeolite catalyst M are shown in Fig. 7 and Table 3.

### Catalyst Production Example 13

A powdered Fe-supported zeolite catalyst N was obtained using the same method as that of Catalyst Production Example 9, except that the temperature during the sintering was changed from 600°C to 500°C. The TPD spectrum, the pyridine desorption amount, the crystallite size, and the like of the Fe-supported zeolite catalyst N are shown in Fig. 7 and Table 3.

A honeycomb catalyst N was obtained using the same method as that of Catalyst Production Example 9, except that the Fe-supported zeolite catalyst J was changed to the Fe-supported zeolite catalyst N.

**[Table 3]**

| | Catalyst J | Catalyst K | Catalyst L | Catalyst M | Catalyst N | Catalyst G | Catalyst H |
|---|---|---|---|---|---|---|---|
| CatalystSupport | Zeolite | Zeolite | Zeolite | Zeolite | Zeolite | Zeolite | Zeolite |
| SiO₂/Al₂O₃ | 10.5 | 11.9 | 9.9 | 9.9 | 10.5 | 24.7 | 24.8 |
| Structure Type | BEA | BEA | BEA | BEA | BEA | BEA | BEA |
| Amount of Fe Supported (wt% in terms of Fe₂O₃] | 5.3 | 5.9 | 3.8 | 3.7 | 5.4 | 1.2 | 2.6 |
| TPD Spectrum | | | | | | | |
| Pyridine Desorption Amount w at 150°C to 450°C [µmol/g] | 432.1 | 445.5 | 504.3 | 504.0 | 461.6 | 280.0 | 287.0 |
| Pyridine Desorption Amount s at 450°C to 800°C [µmol/g] | 124.9 | 228.9 | 442.1 | 381.1 | 361.9 | 348.0 | 239.0 |
| Desorption Amount w/Desorption Amount s [-] | 3.46 | 1.95 | 1.14 | 1.32 | 1.28 | 0.80 | 1.20 |
| L Peak Value/H Peak Value [-] | 3.03 | 2.47 | 1.76 | 2.06 | 2.10 | 1.30 | 1.85 |
| Pyridine Saturated Adsorption Amount [µmol/g] | 847 | 856 | 1216 | 1031 | 1063 | 657 | 594 |
| Crystallite Size [nm] | 59.0 | 63.8 | 67.1 | 61.6 | 68.7 | 14.6 | 14.5 |

### Test Example 3

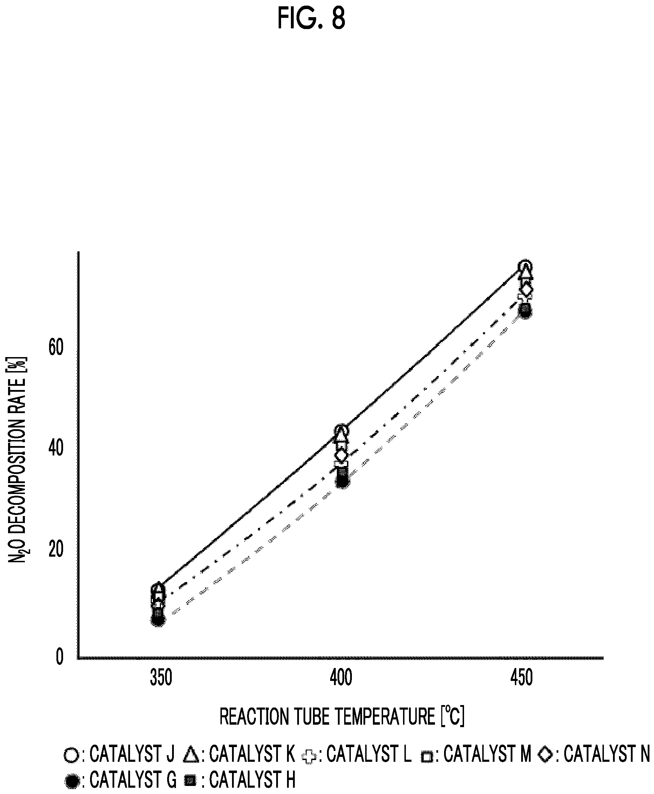

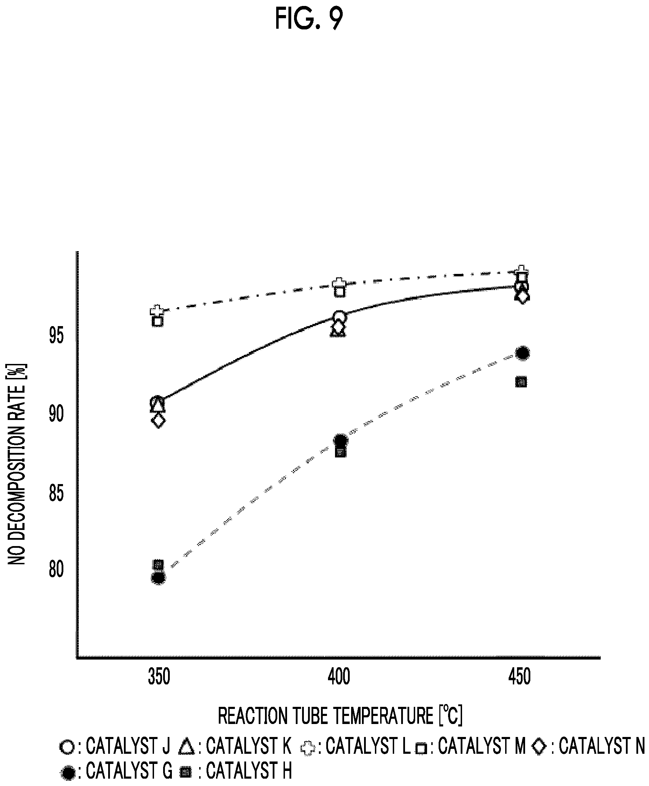

Each of the above-described honeycomb catalysts G, H, and J to N was attached to a reaction tube. Simulant gas having a composition ratio shown in Table 4 was caused to flow at AV = the amount of gas/the geometric surface area of the catalyst = 25 Nm/hr (SV = the amount of gas/the amount of the catalyst = 20000 hr⁻¹), and the reaction tube was set to 350°C, 400°C, and 450°C. At each of the temperatures, a N₂O decomposition rate and a NO decomposition rate were measured. The results are shown in Figs. 8 and 9. When the honeycomb catalysts J to N having a large crystallite size and a large desorption amount w were compared to the honeycomb catalysts G and H, both of the N₂O decomposition rate and the NO decomposition rate were high.

**[Table 4]**

| Composition Ratio of Simulant Gas | |
|---|---|
| NO | 450 ppm |
| N₂O | 180 ppm |
| NH₃ | 570 ppm |
| SO₂ | 15 ppm |
| O₂ | 13% |
| H₂O | 15% |
| N₂ | Balance |

### Catalyst Production Example 14

A honeycomb catalyst G2 was obtained using the same method as that of Catalyst Production Example 7, except that the coating amount was changed from 70 g/m² to 140 g/m².

### Catalyst Production Example 15

A honeycomb catalyst J2 was obtained using the same method as that of Catalyst Production Example 9, except that the coating amount was changed from 70 g/m² to 140 g/m².

### Test Example 4

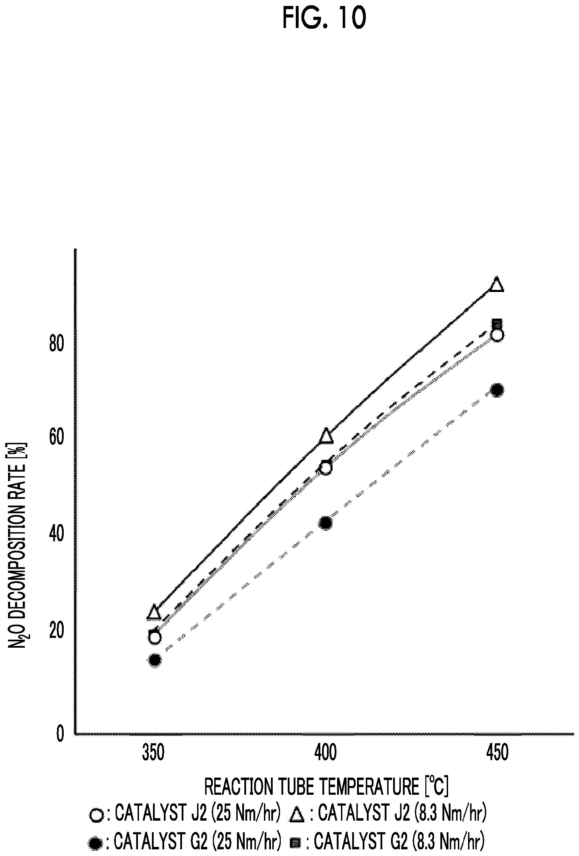

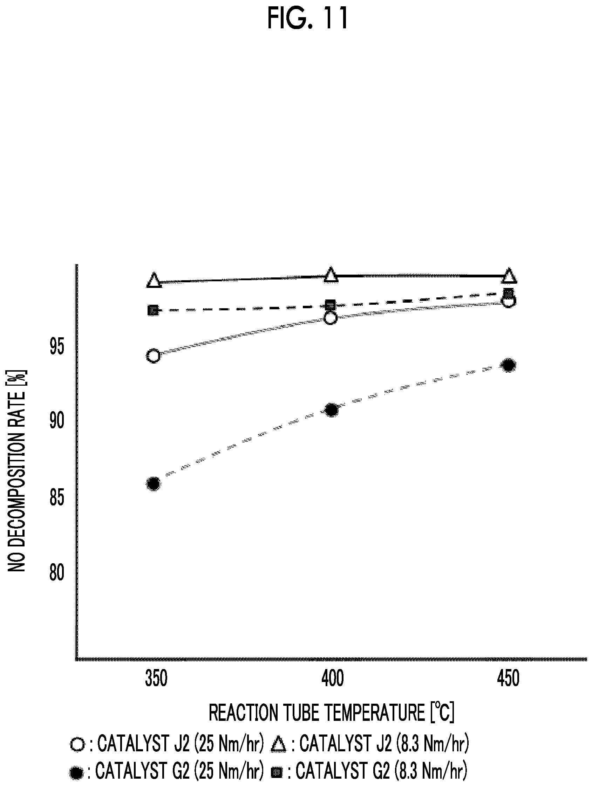

Each of the above-described honeycomb catalysts G2 and J2 was attached to a reaction tube. Simulant gas having a composition ratio shown in Table 4 was caused to flow at AV = 25 Nm/hr and 8.3 Nm/hr, and the reaction tube was set to 350°C, 400°C, and 450°C. At each of the temperatures and each of the flow rates, a N₂O decomposition rate and a NO decomposition rate were measured. The results are shown in Figs. 10 and 11. The N₂O decomposition rate of the honeycomb catalyst J2 at AV 25 Nm/hr was the same as the N₂O decomposition rate of the honeycomb catalyst G2 at AV 8.3 Nm/hr. These results can be shown that the N₂O decomposition rate constant of the honeycomb catalyst J2 was about 3 times the N₂O decomposition rate constant of the honeycomb catalyst G2.

### Catalyst Production Example 16

Honeycomb catalysts G_{H}, J_{H}, and K_{H} were obtained by performing a hydrothermal treatment on the honeycomb catalysts G, J, and K under conditions shown in Table 5 for 70 hours.

### Test Example 5 (Evaluation of Water Resistance/SOx Resistance)

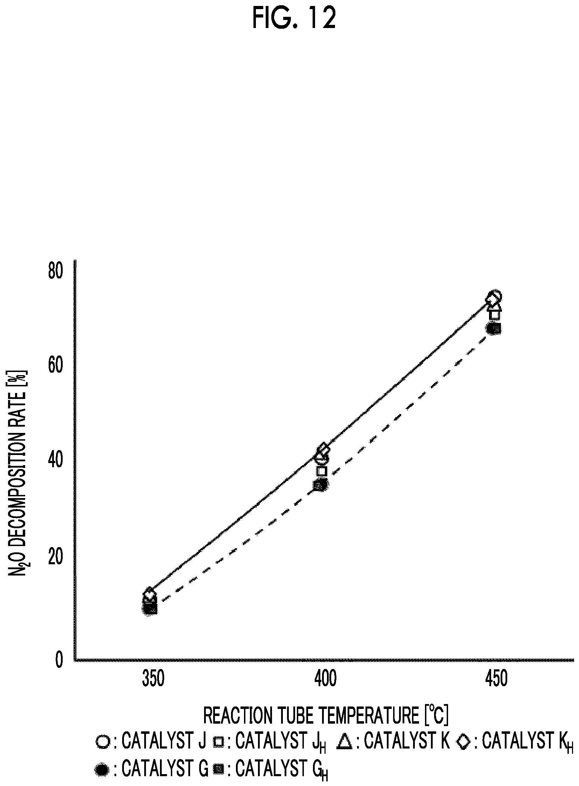

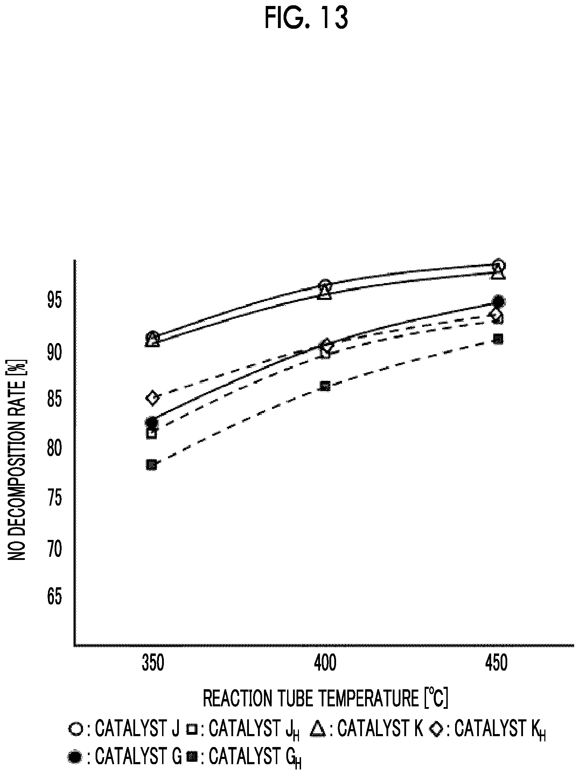

Each of the above-described honeycomb catalysts G, J, K, G_{H}, J_{H}, and K_{H} was attached to a reaction tube. Simulant gas having a composition ratio shown in Table 4 was caused to flow at AV = 25 Nm/hr, and the reaction tube was set to 350°C, 400°C, and 450°C. At each of the temperatures, a N₂O decomposition rate and a NO decomposition rate were measured. The results are shown in Figs. 12 and 13. It can be seen that, in the honeycomb catalyst according to the present invention, even after the hydrothermal treatment, the N₂O decomposition rate and the NO decomposition rate were maintained to be 60% or more and 90% or more, without a significant decrease, that is, the water resistance and the sulfur oxide resistance are excellent.

**[Table 5]**

| Hydrothermal Treatment Conditions | |
|---|---|
| NO | 0 ppm |
| N₂O | 0 ppm |
| NH₃ | 0 ppm |
| SO₂ | 20 ppm |
| O₂ | 20% |
| H₂O | 20% |
| N₂ | Balance |
| Temperature | 530°C |
| AV | 12.5Nm/hr |
| SV | 10000hr⁻¹ |

### Catalyst Production Example 17

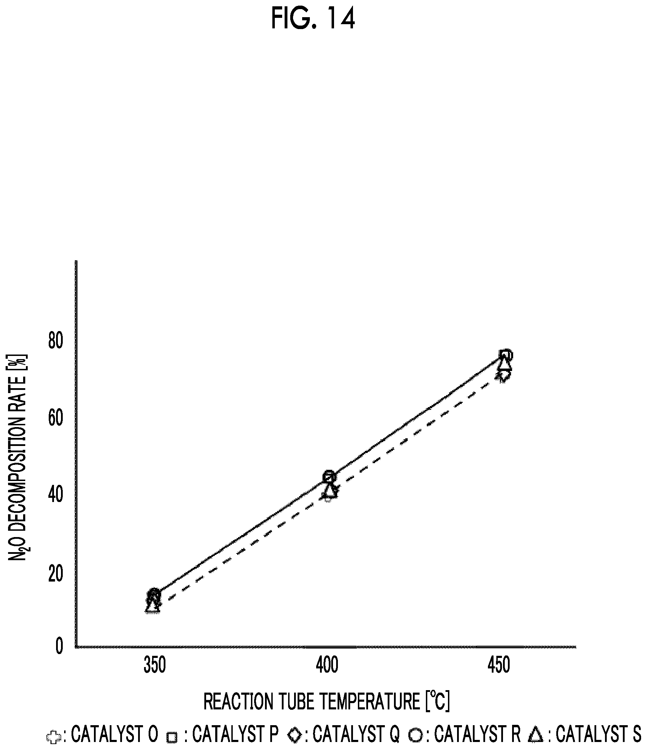

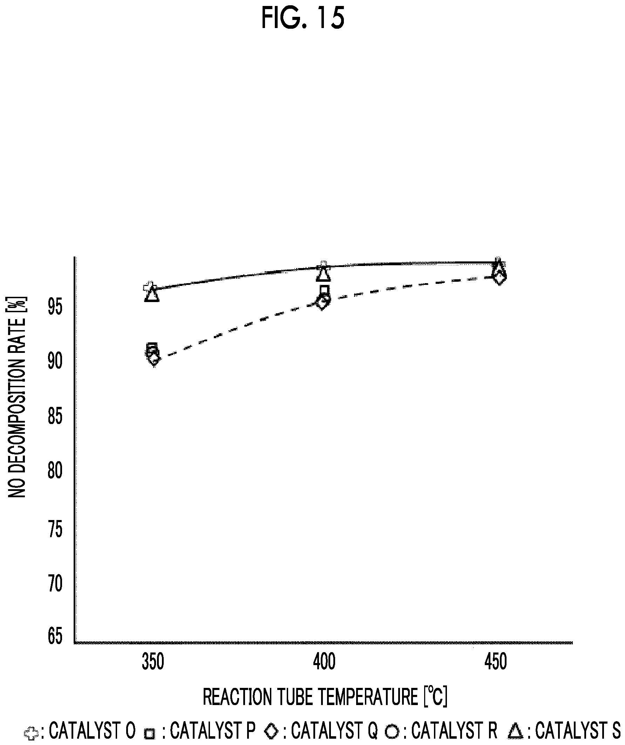

60 g of OSDA-free BEA-type zeolite (SiO₂/Al₂O₃ ratio = 10) was poured into 2000 ml of an aqueous solution heated to 80°C and containing 18.2 g of iron(II) sulfate heptahydrate (FeSO₄·7H₂O). Next, in a state where the temperature was kept at 80°C, the mixture was stirred for 3 hours to obtain a slurry. The slurry was dehydrated using a suction filter to which filter paper (No. 5C) was attached. A predetermined amount of pure water was poured to clean the cake on the filter paper. The cleaned cake was dried at 110°C for 12 hours and then sintered at 500°C for 5 hours. After the calcined product was pulverized by a planetary ball mill, the pulverized product was charged into pure water and then stirred to obtain a catalyst slurry. A honeycomb substrate was coated with the catalyst slurry in a coating amount of 70 g/m². The catalyst slurry was dried at 120°C for 2 hours and was sintered at 500°C for 2 hours to obtain a honeycomb catalyst O. The same test as that of Test Example 3 was performed on the honeycomb catalyst O. The results are shown in Figs. 14 and 15.

### Catalyst Production Example 18

60 g of OSDA-free BEA-type zeolite (SiO₂/Al₂O₃ ratio = 10) was poured into 2000 ml of an aqueous solution heated to 80°C and containing 26.4 g of iron(III) nitrate nonahydrate (Fe₂(NO₃)₃·9H₂O). Next, in a state where the temperature was kept at 80°C, the mixture was stirred for 3 hours to obtain a slurry. The slurry was dehydrated using a suction filter to which filter paper (No. 5C) was attached. A predetermined amount of pure water was poured to clean the cake on the filter paper. The cleaned cake was dried at 110°C for 12 hours and then sintered at 600°C for 5 hours. After the calcined product was pulverized by a planetary ball mill, the pulverized product was charged into pure water and then stirred to obtain a catalyst slurry. A honeycomb substrate was coated with the catalyst slurry in a coating amount of 70 g/m². The catalyst slurry was dried at 120°C for 2 hours and was sintered at 500°C for 2 hours to obtain a honeycomb catalyst P. The same test as that of Test Example 3 was performed on the honeycomb catalyst P. The results are shown in Figs. 14 and 15.

### Catalyst Production Example 19

A powdered Fe-supported zeolite catalyst Q was obtained using the same method as that of Catalyst Production Example 18, except that the temperature during the sintering was changed from 600°C to 500°C. A honeycomb catalyst Q was obtained using the same method as that of Catalyst Production Example 18, except that the Fe-supported zeolite catalyst P was changed to the Fe-supported zeolite catalyst Q. The same test as that of Test Example 3 was performed on the honeycomb catalyst Q. The results are shown in Figs. 14 and 15.

### Catalyst Production Example 20

A powdered Fe-supported zeolite catalyst R and a honeycomb catalyst R were obtained using the same method as that of Catalyst Production Example 18, except that the OSDA-free BEA-type zeolite (SiO₂/Al₂O₃ ratio = 10) was changed to BEA-type zeolite (SiO₂/Al₂O₃ ratio = 12). The same test as that of Test Example 3 was performed on the honeycomb catalyst R. The results are shown in Figs. 14 and 15.

### Catalyst Production Example 21

A powdered Fe-supported zeolite catalyst S and a honeycomb catalyst S were obtained using the same method as that of Catalyst Production Example 18, except that 26.4 g of iron(III) nitrate nonahydrate (Fe₂(NO₃)₃·9H₂O) was changed to 18.2 g of iron(II) sulfate heptahydrate (FeSO₄·7H₂O). The same test as that of Test Example 3 was performed on the honeycomb catalyst S. The results are shown in Figs. 14 and 15.

### Catalyst Production Example 22

A honeycomb catalyst P2 was obtained using the same method as that of Catalyst Production Example 18, except that the coating amount was changed from 70 g/m² to 140 g/m². The same test as that of Test Example 4 was performed on the honeycomb catalyst P2. The N₂O decomposition rate of the honeycomb catalyst P2 at AV 25 Nm/hr was the same as the N₂O decomposition rate of the honeycomb catalyst G2 at AV 8.3 Nm/hr. These results can be shown that the N₂O decomposition rate constant of the honeycomb catalyst P2 was about 3 times the N₂O decomposition rate constant of the honeycomb catalyst G2.

### Catalyst Production Example 23

A honeycomb catalysts P_{H} was obtained by performing a hydrothermal treatment on the honeycomb catalyst P under conditions shown in Table 5 for 70 hours. The same test as that of Test Example 5 was performed on the honeycomb catalyst P_{H}. It can be seen that, in the honeycomb catalyst P, even after the hydrothermal treatment (honeycomb catalyst P_{H}), the N₂O decomposition rate and the NO decomposition rate were maintained to be 60% or more and 90% or more, without a significant decrease. That is, the water resistance and the sulfur oxide resistance were excellent.

### Reference Signs List

1: engine cylinder
2: catalyst reactor
3: air
4: fuel
5: exhaust manifold
6: reducing agent
7: temperature controller
8: N2O decomposition catalyst fixed bed
12: turbine
13: compressor
14: intake manifold
15: exhaust pipe

## Claims

1. A catalyst comprising:
a support containing SiO₂ and Al₂O₃; and
an iron element supported on the support,
wherein in a TPD spectrum, a total amount of pyridine desorbed in a range of 150°C or higher and lower than 450°C is 100 µmol or more per 1 g of the catalyst, and
the catalyst is configured to promote a decomposition reaction of nitrous oxide or a decomposition reaction of nitrous oxide and nitric oxide.

2. A catalyst comprising:
a support containing SiO₂ and Al₂O₃; and
an iron element supported on the support,
wherein in a TPD spectrum, a ratio of a pyridine desorption amount at a peak top present in a range of 150°C or higher and lower than 450°C to a pyridine desorption amount at a peak top present in a range of 450°C or higher and 800°C or lower is more than 1, and
the catalyst is configured to promote a decomposition reaction of nitrous oxide or a decomposition reaction of nitrous oxide and nitric oxide.

3. A catalyst comprising:
a support containing SiO₂ and Al₂O₃; and
an iron element supported on the support,
wherein in a TPD spectrum, a ratio of a total amount of pyridine desorbed in a range of 150°C or higher and lower than 450°C to a total amount of pyridine desorbed in a range of 450°C or higher and 800°C or lower is 0.9 or more, and
the catalyst is configured to promote a decomposition reaction of nitrous oxide or a decomposition reaction of nitrous oxide and nitric oxide.

4. A catalyst comprising:
a support containing SiO₂ and Al₂O₃; and
an iron element supported on the support,
wherein in a TPD spectrum, a temperature at a peak top in a range of 450°C or higher and 800°C or lower is 490°C or higher and 650°C or lower, and
the catalyst is configured to promote a decomposition reaction of nitrous oxide or a decomposition reaction of nitrous oxide and nitric oxide.

5. A catalyst comprising:
a support containing SiO₂ and Al₂O₃; and
an iron element supported on the support,
wherein a saturated adsorption amount of pyridine is 100 µmol or more per 1 g of the catalyst, and
the catalyst is configured to promote a decomposition reaction of nitrous oxide or a decomposition reaction of nitrous oxide and nitric oxide.

6. A catalyst comprising:
a support containing SiO₂ and Al₂O₃; and
an iron element supported on the support,
wherein a crystallite size is 20 nm or more, and
the catalyst is configured to promote a decomposition reaction of nitrous oxide or a decomposition reaction of nitrous oxide and nitric oxide.

7. A catalyst comprising:
an organic structure-directing agent (OSDA)-free zeolite; and
an iron element supported on the organic structure-directing agent (OSDA)-free zeolite,
the catalyst is configured to promote a decomposition reaction of nitrous oxide or a decomposition reaction of nitrous oxide and nitric oxide.

8. The catalyst according to any one of Claims 1 to 7,
wherein even after being exposed to gas containing 20% of H₂O and 20 ppm of SO₂ at 530°C for 70 hours, a NO₂ decomposition rate is 60% or more and NO decomposition rate is 90% or more under a condition of 450°C.

9. A catalyst element comprising:
a substrate; and
the catalyst according to any one of Claims 1 to 8 that covers the substrate.

10. A method of reducing nitrous oxide or nitrous oxide and nitric oxide from gas containing at least one selected from water and sulfur oxide and nitrous oxide or from gas containing at least one selected from water and sulfur oxide, nitrous oxide, and nitric oxide, the method comprising:
bringing the gas containing at least one selected from water and sulfur oxide and nitrous oxide or the gas containing at least one selected from water and sulfur oxide, nitrous oxide, and nitric oxide and a reducing agent into contact with the catalyst according to any one of Claims 1 to 8 or the catalyst element according to Claim 9 to decompose nitrous oxide or nitrous oxide and nitric oxide.

11. The method according to Claim 10,
wherein in the gas, a content of the water is 10% or more and a content of the sulfur oxide is 15 ppm or more.

12. An exhaust gas treatment device comprising:
a reactor that accommodates the catalyst according to any one of Claims 1 to 8 or the catalyst element according to Claim 9;
a first supply line that is configured such that gas to be treated flows into the reactor;
a second supply line that is configured such that a reducing agent flows into the reactor; and
an exhaust line that is configured such that gas flows out from the reactor,
wherein the gas to be treated is gas containing at least one selected from water and sulfur oxide and nitrous oxide or gas containing at least one selected from water and sulfur oxide, nitrous oxide, and nitric oxide.

13. The exhaust gas treatment device according to Claim 12,
wherein in the gas to be treated, a content of the water is 10% or more and a content of the sulfur oxide is 15 ppm or more.

14. An ammonia fuel engine comprising the exhaust gas treatment device according to Claim 12 or 13.
